# EUROPEAN PATENT APPLICATION

(11) **EP 1 495 982 A1**
(43) Date of publication of application: **12.01.2005**
(21) Application number: 04253876.9
(22) Date of filing: 29.06.2004
(51) Int. Cl.: B65D 6/18, B65D 21/02, B65D 55/06

(54) **Storage crate**

(30) Priority: 10.07.2003 GB 0316101; 15.08.2003 GB 0319231
(71) Applicant: Sec-Sea Pak Limited, London N3 3DG (GB)
(72) Inventor: Arnold, Michael, London E3 3DG (GB)
(74) Representative: Kunz, Herbert, Dr.

(57) **Abstract**

A reusable, foldable, stackable, lidded crate comprising a bottom plate (2), an integral lid (7), two side walls (3,4), a front wall (5) and a back wall (6) with hinge arrangements connecting each wall to the bottom plate and a hinge arrangement connecting the lid to the back wall and being constructed in such a way that the crates can be security tagged or locked when carrying goods and can be folded compactly when not in use so that multiple folded crates can fit inside another, larger crate, in an assembled state.

## Description

### BACKGROUND

The present invention relates to a reusable, plastic, folding crate or container for storage or transport of goods such as apparel, in particular folding crates with an optional integral hinged lid or lid otherwise connected to the storage crate body walls. The crate walls are also hinged or otherwise connected to the bottom and can swing inward onto the crate bottom and wherein the corners of the crate are joined by means of a releaseable connection to the walls.

Such crates have advantages over traditional cartons such as those made of cardboard or thin plastic which are not considered by those in the shipping or container industry as being strong enough for shipping in a stack. These traditional crates take time to staple together and are wasteful because they largely are not recoverable or reusable. If such traditional cartons are reusable then it is only for a small number of occasions, and typically no more than 3 or 4 journeys before these cartons are unsteady, unstable and/or ripped or water-logged. Folding crates such as in the present invention have advantages over a one-piece, rigid unit crate as rigid crates do not allow a reduction in size (for instance folding crates of the present invention can be folded, when they are not in use). Empty rigid crates therefore take up a larger amount of space in the warehouse when being stored which is an inefficient use of resources and costs suppliers, manufacturers etc. a significant amount of money.

A second disadvantage of a one-piece, rigid unit crate is that after the contents have been delivered and decanted the empty crates must be transported back to the distributor. Since they do not reduce in size they will take up a large amount of space on the return journey and be yet a further inefficient use of resources. It is typical for the transportation logistics industry for suppliers to charge by volume, including for volume of empty crates or containers being returned to depot. This can result in massive overheads to supplier and merchants alike in trying to ship goods around a geographic area. There has been a long-felt need in transportation logistics to reduce volume of empty containers being shipped between various depot and supply points as well creating a crate that is reusable for upwards of 30, 40 or event 50 journeys in order to reduce the reliance on cardboard in the industry.

United States Patent 6,073,790 (the '790 patent) attempts to address the aforementioned problems by disclosing a container for holding a plurality of packages for transport or storage. The container is manufactured from a rigid plastic material and includes a bottom and four sides that are connected to the bottom by hinge members. The erect side walls are connected by a snap-in connection. The container can be folded in to the return transport position in which the four side walls are folded on to the bottom by folding opposing side walls on to the bottom and then the two remaining side walls on top.

Although the container in the '790 patent does provide certain useful advantages over other prior art containers for instance over cardboard cartons, the structure can be improved. The '790 container does not have an integral lid or top covering. Lids are essential for goods such as apparel that must be transported in an environment protected from dirt and dust. Separate lids would therefore need to be transported on the return transport journey adding to the bulk of the shipment. An integral lid would make a folding container easier to use and give more efficient use of resources on the return transport journey.

The abovementioned container described in the '790 patent is also not designed to stack the containers one on top of the other. It does not have interlocking means on the tops and bottoms of the crates to allow a stack on a pallet to be built upwards in a stable configuration. The stacking of containers is essential for the efficient movement of goods when loading and unloading the means of transport. Therefore the abovementioned container could be improved by designing means to stack the containers.

### OBJECTS AND SUMMARY OF THE INVENTION

In light of the above-mentioned improvement to which the prior art containers are susceptible, it is an object of the present invention to provide a novel reuseable, plastic, crate or container that can be folded, having an integral lid that is also capable of being stacked in a sturdy formation.

Another unexpected advantage of the present invention over the prior art is that an integral lid provides stability to the erect box. It therefore obviates the necessity for a snap-in connection to hold the side walls together. This is advantageous because folding containers are predominantly operated by untrained/unskilled personnel, being in particular also used in the private sector moreover, it is often very difficult to release the side walls from their lock-in position because the actual snap-in connection may be unknown. The users of the folding containers can hurt themselves particularly when converting the container to the service position or empty position where they can pinch their fingers. The side walls of the present invention are held in place by tongue in grove means running along the side walls or indeed by a hinge connection. There is no need for catches to lock the side walls in place because when the lid closes the crate it stabilises the structure by holding the top corners of the side walls together. The walls and integral lid of the crate thereby collapse and fold inwards with virtually no effort, but is very sturdy in result. It is also critical to have a container that collapses instantaneously (including the integral lid) and can be reconstituted as quickly and simply. This is because time is of the essence in order to meet the tight logistics schedules of merchandise suppliers.

Another object of the present invention is to provide a reusable, foldable, lidded crate of a larger size. This larger crate is constructed so as to permit multiple folded crates of a smaller size (the "Baby" or "Babies") to be inserted or slotted into the larger crate (the "Mother") when the Mother is in the service position. By inserting multiple, reuseable crates into a larger Mother crate the invention addresses the problem of the cost of the return transport journey of bulky empty crates. As mentioned briefly above, in the transport trade, the price paid to ship empty crates is dependent on the number of crates. Therefore, whether they are rigid, nested or even folded crates the price for shipping 60 crates, for example, will be the same for each type of crate. The present invention reduces the cost of shipping empty crates considerably by designing the mother crate to house a multiple of smaller crates. For example if the mother crate could house 5 Baby reusable crates then the cost of the return transport of 60 empty crates would be merely that of transporting 10 crates. This would result in vast savings for the suppliers, logistics companies and ultimately the end purchaser of the goods being transported (i.e. the consumer).

Another object of the invention is to provide means for security labelling and tagging the crates to facilitate passage through customs and give evidence of tampering.

A final object of the invention is to provide means for stacking crates vertically in order to facilitate loading and unloading crates on pallets. The invention addresses the problem of making a stable stack with two different sizes of crate. For crates of the same size a ridge on the underside of the crate fits within the rim of the lid. For crates of different sizes the bottom of the smaller crate fits within the rim of the lid of the larger crate.

### BRIEF DESCRIPTION OF THE DRAWINGS

Preferred embodiments of the present invention will be described in greater detail with references to the accompanying drawings, wherein like elements bear like reference numerals and wherein:
FIG. 1 is side view of the crate according to the preferred embodiment of the present invention showing the side walls in the vertically upright position wherein the crate is open and the integral lid (7) is resting parallel to the outside of the back wall (6).
FIG. 2 shows a solid view of the preferred embodiment of the crate showing the ribbed outer surface (8, 9) of the side (3) and front (5) walls.
FIG. 3 shows a solid view of the preferred embodiment with half walls (3, 4, 5, 6) in the erect position to show the arrangement of the hinges (11, 12, 13, 14).
FIG. 4 is a side-on, cross-sectional view of a folded crate showing the first side wall (3) folded against the crate bottom on top of which is a second side wall (4), then the back wall (6) with folded lid (7) and lastly the front wall (5).
FIG. 5 is a cross-sectional view of an open mother crate (21) housing two smaller, baby folded crates (20).

### DETAILED DESCRIPTION OF THE PREFERRED EMBODIMENTS

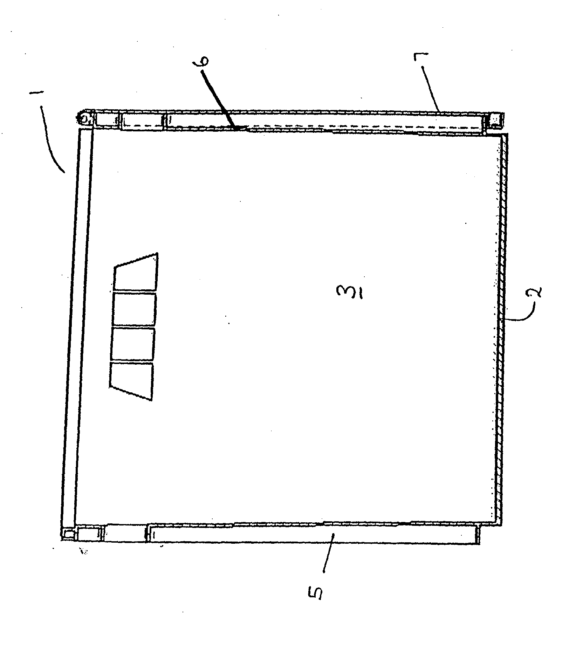

The folding crate (1) according to the preferred embodiment of the invention includes, as seen in FIGS 1-4, a bottom member (2), two side walls (3, 4), a front wall (5), a back wall (6) and an integral lid (7).

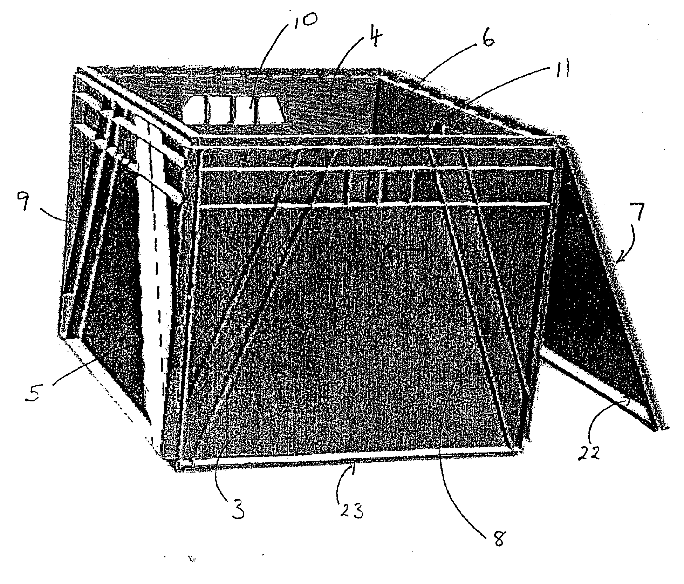

Each of the walls (3, 4, 5, 6) is solid, as shown in FIG 2, but could also have a plurality of openings that extend therethrough in order to make the crate lighter in weight.

Each of the walls of the crate (3, 4, 5, 6) has ribs on the outside surface (8, 9), shown in FIG 2 and a planar inner surface. The ribs are load bearing and redistribute the weight of crates stacked on top thereby strengthening the crate and minimising the risk of the walls buckling or collapsing from the weight of the stack and making the crate stacks more stable. The particular design of the ribs as indicated in FIG 2 is merely one such array or design. It will be readily apparent to a skilled person other arrays of rib design.

The side walls (3 and 4) have handle openings (10 and 11) that extend completely through the side walls. The handle openings may optionally be positioned centrally adjacent the top end of the erect box and are in substantial horizontal alignment. The handle openings 10, 11 serve as handles for lifting the crate when the walls 3, 4, 5, 6 are assembled in an upright position.

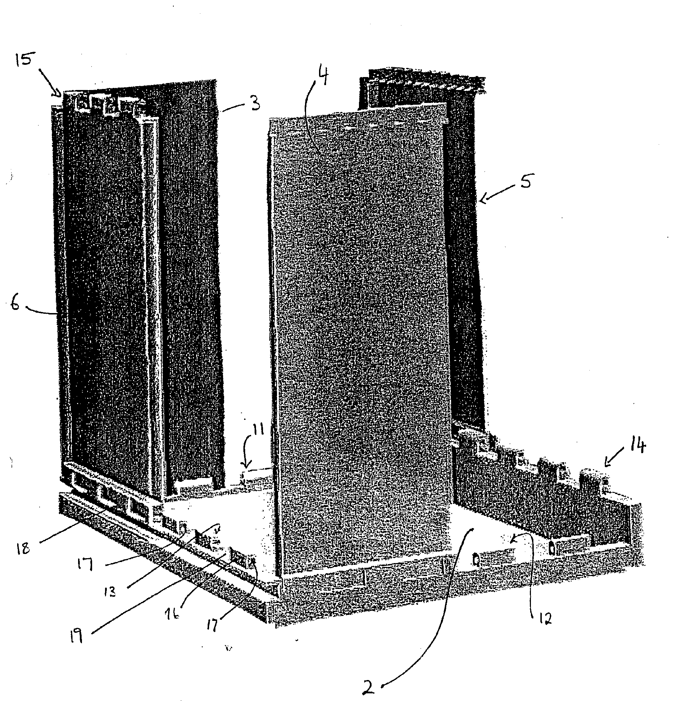

The first side wall 3 is connected to the bottom 2 by a first hinge arrangement 11 while the second side wall 4 is connected to the bottom by a second hinge arrangement 12 while the back wall 6 is connected to the bottom by a third hinge arrangement 13 and the front wall is connected to the bottom 2 by a forth hinge arrangement 14. The lid 7 is connected to the top of the back wall 6 by a hinge arrangement 15. Each of the hinge arrangements 11, 12, 13, 14, 15 have substantially the same mechanism. Fig 3 illustrates the hinge arrangements. The hinge means 13 has a plurality of spaced apart projections 16 positioned along one side of the bottom 2. The projections 16 have holes 17 that extend therethrough and a space 19 between the projections 16. The bottom end of the back wall 6 has a plurality of knuckles 18 with holes that extend therethrough. The knuckles 18 are spaced apart the same distance as the spaces 19 between the projections 16. In that way each of the knuckles can fit between the projections.

The hinge 13, formed from the projections 16 and the knuckles 18 has a longitudinal hole that extends along a substantial portion of a length of one side of the bottom 2. This is formed from the holes 17 in the projections 16 corresponding to the holes in the knuckles 18. Additionally, the hinge arrangement 13 includes a pin that extends through the longitudinally extending hole in the side of the bottom and through the holes 17 in the projections 16 and holes in the knuckles 18. The pin is encased within the hinge as the holes in the knuckles 18 at each end of the back wall 6 are closed at the outside edge. It should be understood from the foregoing that each of the hinges 11, 12, 14 and 15 are substantially identical to 13.

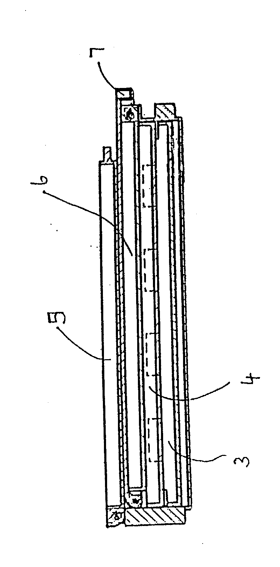

The above described construction of the bottom 2, walls 3, 4, 5 and 6 and hinges 11, 12, 13 and 14 is advantageous because it permits the walls to be folded inwardly typically with just a single tap of the foot in order to produce a compact folded crate when the crate is stored or transported. As shown in FIGs. 1 and 2 the walls 3, 4, 5 and 6 can be positioned in a substantially vertical position for receiving goods. After the goods have been removed the side walls 3 and 4 can be folded inwardly as shown in FIG. 4. Similarly, after the side walls 3 and 4 have been folded inwardly the back wall 6 can be folded inwardly with the integral lid 7 folded so that it rests substantially parallel to the outer side of the back wall 6. Similarly, the front wall 5 can be folded inwardly. The folded configuration is depicted in FIG. 4.

The first, second, third and forth hinge arrangements 11, 12, 13 and 14 are positioned such that in the folded configuration, the side walls 3 and 4, back wall 6 with integral lid 7 and front wall 5 can lie substantially parallel to each other and to the bottom 2 as illustrated in FIG. 4. The walls 3, 4, 5, 6 and lid 7 are capable of being positioned in that manner when folded because the hinge axes about which the walls 3, 4, 5 and 6 pivot or fold are at elevationally different positions. The vertical distances between the hinge axes about which the side walls 3 and 4 pivot or fold is approximately equal to the thickness of a wall 3, 4, 5 or 6. The vertical distance between the hinge axes about which side walls (3, 4) and the back wall 6 pivot or fold is approximately equal to the thickness of two side walls. The vertical distance between the hinge axes about which side walls (3, 4), the back wall 6 and the front wall 5 pivot is approximately equal to the thickness of the two side walls 3 and 4, the back wall 6 and the integral lid 7.

The walls 3, 4, 5 and 6 are held together when in an upright position by short side flaps located at each end of walls 3, 4, 5 and 6 wherein the flaps are substantially perpendicular to the wall and substantially the same height as the wall. Two flaps meet at each corner one from each wall that comprises the corner. The flaps connect by a tongue and grove design or other means to hold the walls in place.

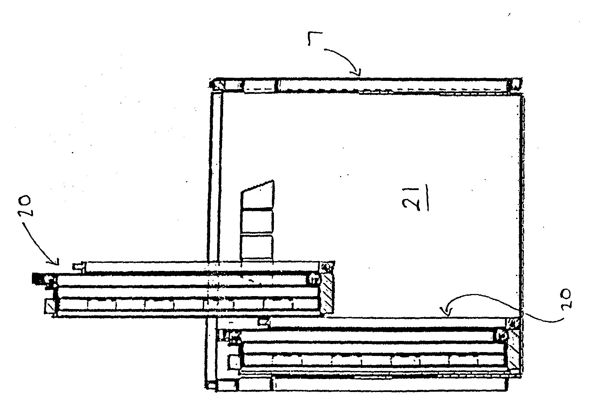

Another advantage associated with the folding crate according to the first embodiment of the present invention is that multiple folded crates can be stored in a larger crate of substantially similar design but larger dimensions. In the preferred embodiment of the present invention, the larger or "mother" crate 21 is designed so that it is large enough to fit 5 folded smaller or "baby" crates 20 that are inserted vertically, as shown in FIG 5. When the mother crate is full the integral lid 7 can close the crate 21. In this way six empty crates can make the return transport journey in one single crate. It will be obvious to the skilled artisan that the size of the Mother crate can be of any dimensions suitable for the contents being transported or stored within the mother storage container. The number of smaller or baby crates do not have to be limited to 5 crates. The number of Baby crates can be increased or decreased as may be appropriate for the contents being shipped or being placed in storage.

Another object of the invention is to provide means for stacking crates one on top of the other. The lid 7 of the crates has a top wall 22 (FIG. 2) having a raised peripherally extending rim section contiguous with the top wall section. The lids are designed so that a rib running close to the edge of the base of one crate can fit within the raised peripherally extending rim section 23 (FIG. 2) of another crate. The larger, mother crates have been designed so that the entire base of the smaller crates can fit within the raised peripherally extending rim section of the mother crate. The invention ensures that a stable stack can be created from larger and smaller crates intermixed within the stack. The integral lid is hinged to the top wall (22) or is otherwise connected to the side walls of the crate. As a further option if stacking of crates is not at issue, but the requirements of a reusable folding container is still of utmost importance, is to have a crate as designed in the present invention having only a base and side walls but otherwise the benefits of the Mother and Baby storage concept would be present.

Means for security tagging the crates is provided by slots in the lid and any one of the walls through which a labelled security tag can be threaded through thereby linking the lid to the wall of the crate so that the crate cannot be opened unless the tag is broken. The breaking of the tab provides evidence of tampering. The tag will facilitate the passage of the crate through customs and recording of loaded and unloaded crates.

The folding crates of the preferred embodiments of the present invention are preferably manufactured from polypropylene, although other types of material such as polyphylene-oxide and polycarbonate could be employed. The two sizes of crates are preferably in two different colours or shades of colour to distinguish them easily when assembling the crates for storage or the return transport journey.

The principles, preferred embodiments and modes of operation of the present invention have been described in the foregoing specification. However, the invention which is intended to be protected is not to be construed as limited to the particular embodiments disclosed. Further the embodiments described herein are to be regarded as illustrative rather than restrictive. Variations, changes and equivalents may be made by others without departing from the scope of the invention.

## Claims

1. A folding crate or container comprising a bottom (2), two side walls (3, 4), a front wall (5), and a back wall (6), where each wall is attached to the bottom (2) by means of a hinge arrangement (11, 12, 13, 14) allowing the walls to swing towards the bottom (2), where the back wall (6) and front wall (5) are fixed to the side walls (3, 4) by a tongue and groove or similar arrangement when the crate is in its assembled form and where any one or more of the bottom hinges (11, 12, 13, 14) differs in height from the outside edge of the bottom (2), to allow the crate to be folded so that the walls (3, 4, 5, 6) and lid (7) rest substantially flat on the bottom (2) **characterised in that** an integral lid is attached to the back wall by a hinge arrangement that allows the lid (7) either to close the assembled crate or swing to a position where the lid rests substantially parallel to the back wall (6) regardless of whether the crate is in its assembled or folded states.

2. The folding crate according to claim 1 including a second crate having the same structure as the crate of claim 1 but having smaller dimensions to said crate and wherein the second crate in its folded state as in figure 4 can be placed or slotted inside the first crate.

3. The folding crate according to claim 2 wherein multiple crates of the second crate dimensions can be placed inside the larger, first crate.

4. The folding crate according to any one of claims 1 to 3 wherein the integral lid (7) has a slot in connection with a slot on one of the walls (3, 4, 5, 6) of the crate through which a security tag is tied or attached.

5. The folding crate according to any one of claims 1 to 4 wherein the walls (3, 4, 5, 6) have load-bearing strips (8, 9).

6. The folding crate according to any one of claims 1 to 5 wherein the lid (7) of the closed crate has a rim (22) to allow the bottom (2) of another crate to be positioned within the lid (7) to provide a stable stacked arrangement.

7. The folding crate according to any one of claims 1 to 6 wherein the crate is manufactured from either polypropylene, polyphylene-oxide or polycarbonate or any other suitable plastic material.

8. The folding crate according to any one of claims 1 to 7 wherein the larger, "Mother" crate is either a different colour or a different pantone shade from the smaller "Baby" crate in order to more easily distinguish the two crate types.

9. A method of transporting the crates as claimed in claim 1 in an empty state wherein one of more folded, smaller, Baby crates are inserted in to an assembled, larger, "mother" crate in order that they can be transported as one single crate.
